# EUROPEAN PATENT SPECIFICATION

(11) **EP 1 729 587 B1**
(45) Date of publication and mention of the grant of the patent: **19.01.2011**
(21) Application number: 05710900.1
(22) Date of filing: 18.02.2005
(51) Int. Cl.: A21D 10/04, A21D 2/18, A21D 2/26, A23L 1/305, A23L 1/308, A23L 1/00

(54) **MICROWAVEABLE AND OVEN-BAKABLE COATED FOOD PRODUCTS**
IN DER MIKROWELLE ERHITZBARE SOWIE IN DER BACKRÖHRE GARBARE UMHÜLLTE NAHRUNGSMITTELPRODUKTE
PRODUITS ALIMENTAIRES ENROBES POUVANT ETRE CUITS AU FOUR MICRO-ONDES ET AU FOUR CLASSIQUE

(30) Priority: 20.02.2004 US 546252 P
(43) Date of publication of application: 13.12.2006
(73) Proprietor: Coöperatie Avebe U.A., 9641 GK Veendam (NL)
(72) Inventor: ZHAO, Jessie, Jianxin, Plainsboro, NJ 08536 (US); BERTRAND, Dale, Thomas, Columbus, NJ 08802 (US)
(74) Representative: van Loon, C.J.J.
(86) International application number: PCT/NL2005/000121
(87) International publication number: WO 2005/079586

(56) References cited:
- WO-A-01/08513
- AU-A- 5 482 190
- CA-A1- 2 456 221
- US-A- 4 877 628
- US-A- 5 520 937

## Description

### Background of the Invention

This invention relates to a new ingredient composition that when used in frozen coated food products (par fried, raw or full fried) provides a crispy texture after microwaving or oven-baking, similar to that of deep fat fried coated foods.

Coated food products are very popular globally, such as various frozen battered and/or breaded fish, chicken, other meat and vegetable products. It is desirable to have crispy texture after cooking at home or food service for consumption. However, the crispy texture is particularly difficult to achieve when the coated food product is microwaved and/or oven baked and rarely - if ever - as crispy as fried foods. Another major challenge is to maintain the crispy texture after reconstitution for a longer time under heating lamp or at room temperature.

Traditional batters contain various flours, starches, dextrins, etc., which have a tendency to become soggy or tough and chewy after microwaving and/or oven baking the frozen coated foods. Prior art has shown attempts to use a stabilizer composition to pre-treat the meat or vegetable substrate or to use specialized packaging containing various susceptors for microwave heated coated food products. None have used the present novel ingredient composition in the batter system.

### Brief Summary of the Invention

It is a primary object of the invention to provide a (dry) mix for preparing a coated food product having a desirable crisp character when heated for serving by microwave and/or other oven.

It is another object of the invention to provide an improved method for preparing a coated food product for final oven preparation.

It is yet another object of the invention to provide a novel edible product, in particular a product characterized by a crispy texture after microwaving or oven-baking, similar to that of deep fat fried coated foods.

It is yet another object of the invention to provide a method for making an improved edible product characterized by a crispy texture after microwaving and/or oven-baking (similar to that of deep fat fried coated foods).

It has now been found that one or more of these objects and/or one or more objects that are identifiable hereinbelow are achieved by the present invention. In particular the invention provides a new ingredient composition, a method of making and using it and a product improved by it, that when used in frozen coated food products (par fried, raw or full fried) provides a crispy texture after microwaving or oven-baking (similar to that of deep fat fried coated foods).

The composition of the invention, in one aspect, comprises a combination of insoluble dietary fiber (preferably potato fiber) and insoluble vegetable protein, preferably potato protein.

### Detailed Description of the Invention

In particular the invention relates to a batter composition, comprising an insoluble dietary fiber and -insoluble vegetable protein.

More in particular, the invention relates to a batter composition comprising at least one component selected from the group consisting of dietary fibers from a tuber, dietary fibers from a root, insoluble vegetable proteins from a tuber, insoluble vegetable proteins from a root, insoluble vegetable proteins from a legume and insoluble dairy proteins.

The composition of the invention, in effect, provides a crispy coating. The invention allows the provision of a coating like that of a deep-fried coating in frozen coated food product (par fried, raw or full fried) that is microwave and/or oven heated. The following detailed description will describe this in the context of preferred compositions, but it will be understood by those skilled in the art that other materials and processes that are equivalent in result can be employed with equal facility.

The invention provides a coating mixture which can be applied to food products raw or at any degree of cooking doneness. Foods of this type include many popular items, such as various frozen battered and/or breaded fish, chicken, other meat and vegetable products. The invention provides foods of this type having crispy textures after cooking by the simplest of means by microwave, toaster oven or larger at home or by a food service for consumption.

The present invention overcomes difficulties experienced with achieving a crispy texture when the coated food product is microwaved or oven baked and rarely if ever as crispy as fried foods.

In an embodiment, the invention provides a coated food product of which the coating maintains a crispy texture after reconstitution for a satisfactory long time (an preferably increased time) under heating lamp or at room temperature.

Traditional batters contain various flours, starches, dextrins, etc., which have a tendency to become soggy or tough and chewy after microwaving or oven baking the frozen coated foods. The compositions of the invention can replace these conventional batters by replacing all or a suitable proportion of their ingredients to obtain the desired crispy texture. In this manner the invention avoids the needs of the prior art to use a stabilizer composition to pre-treat the meat or vegetable substrate or to use specialized packaging containing various susceptors for microwave heated coated food products.

Within the context of the invention, a component is in particular considered insoluble if the component (such as the protein, or the fiber) has a solubility in water (20 °C) at a pH in the range of 5-10 (optionally buffered, to maintain the pH in the specified range) of about 10 wt.% or less, based on the weight of the solution, preferably about 5 wt.% or less, more preferably about 2.5 wt. % or less. In a much preferred embodiment, the solubility in distilled water (pH 7) at 20 °C of the insoluble component (such as the protein or fiber) is about 10 wt. % or less, preferably about 5 wt. % or less, more preferably about 2.5 wt. % or less. Soluble components are generally any components that have a better solubility than the insoluble component.

The dietary fiber may be any food grade fibrous material, usually of vegetable origin. Such fibers include fibers from roots, from tubers (in particular potato-fibers), from cereals, from legumes and grass-fibers. The fibers may be native or modified fibers. The term modified or derivatized is defined herein as to be chemically, physically, enzymatically or otherwise treated.

The term dietary fiber as used herein is defined as that part of the food (in particular that part of plant origin) that is not digested by the (human) consumer, when eaten. The fibers are insoluble (as defined above).

In particular in case the composition is essentially free of insoluble protein, usually at least part of the dietary fiber is insoluble. This is also preferred in case insoluble protein is present.

Suitable fibers include fibers comprising at least one component selected from the group consisting of cellulose, pectin, starch, hemicellulose, glycoproteins, mucilages and lignin. Preferred insoluble fibers include insoluble cellulose fibers, hemicellulose fibers and lignin fibers. Particularly suitable soluble fibers are gums (such as gums of carbohydrate polymers), pectins and mucilages. It should be noted that insoluble compounds may be derivatized to provide soluble fiber, for example an alkyl cellulose fiber such as methyl cellulose fiber.

In an embodiment, the fibers comprise at least 20 wt. %, in particular at least 25 wt. % more preferably at least 30 wt. % of cellulose, hemicellulose and/or one or more other insoluble fibrous components, based on the dry solids content of the fibers.

Preferably, at least part of the dietary fibers are insoluble, more preferably at least about 50 wt. % of the fibers is insoluble (based on the dry weight of the fibers). Highly preferred is an embodiment wherein at least about 70 wt. % of the fibers is insoluble, in particular at least about 80 wt. %. Without being bound by theory, it is contemplated that the insolubility is advantageous with respect to aid in the controlled venting of water vapor from the substrate (the part of the food other than the coating comprising the batter) to the exterior of the coating. This in turn is beneficial with respect to imparting (and/or maintaining) a crisp coating.

The insoluble vegetable protein may be selected from any vegetable source, in particular from a cereal, a fungus, a legume, a tuber or a root. Preferably the insoluble protein is selected from the group consisting of potato proteins, soy proteins, arrow root proteins, cassava proteins, yam proteins sweet potato proteins and taro proteins. The source (such as cereal, root or tuber) may be a conventional plant material with respect to its amylopectin and amylase content, a high amylopectin variety - such as waxy potato (*e.g*. potato of which the starch content comprises 95-100% amylopectin)), waxy cassava (*e.g*. tapioca comprising 95-100% amylopectin), or a high amylose variety.

Particularly good results have been achieved with potato protein. Such protein is commercially available, *e.g*. Protastar (Avebe) or Protagold Potato Protein (Avebe).

Insoluble soy protein or partially insoluble soy protein is also very suitable. A suitable soy protein is a soy protein obtainable from washing a soy protein composition with an alcohol (in particular ethanol).

Instead of or in addition to insoluble vegetable protein it is also possible to employ an insoluble dairy protein, in particular an insoluble milk protein such as a casein in accordance with the invention

The protein may be obtained in any way from the vegetable source or from dairy, *e.g*. by acidic denaturation or by thermal coagulation, *e.g*. as disclosed in US 6,187,367. Ultrafiltration, *e.g*. as described in WO 97/42834, is also suitable to obtain a protein product. Further suitable technology is known from WO 97/03571 and from WO 02/100187.

In a preferred embodiment, a protein is isolated from vegetable material by thermal coagulation. Thermal coagulation offers several operational advantages, such as the simplicity of the process and the easiness to separate the protein product from the raw material. Thermal coagulation also has a beneficial effect upon several qualitative parameters of the protein product, such as the microbiological quality, the inactivation of enzymes and the loss of anti-nutritional factors (*e.g*. due to degradation) such as trypsin inhibitors.

A particularly preferred thermal coagulation method is a method wherein the juice of a plant or a part thereof, *e.g*. potato juice, is subjected to an acid, heat treatment, or a combination thereof. The temperatures used for heat coagulation can be from 23 to 140°C. More preferred are temperatures between 75 and 120°C, and even more preferred are temperatures between 95-110°C. The temperature may be raised for example by direct steam injection or using a heat-exchanger. The pH value can be anywhere in the range of 1-8. Preferably the pH value is between 3.5 and 6.2 and more preferred the pH-value is at about the iso-electric point of the bulk of the potato proteins (usually for potatoes around pH 5).

The thus coagulated flocculant protein material can be separated from the liquid phase by a filter, separator, decanter or the like, yielding a separated wet potato cake, which can subsequently be partially or fully dried.

The amount of the fiber and insoluble protein can be chosen within wide limits. The combined amount of the (insoluble) fiber and the insoluble protein is usually at least 1 wt.%, preferably at least 5 wt. %, more preferably at least 10 wt. %, even more preferably at least 20 wt. % based upon the total dry weight of the composition.

The upper limit is not particularly critical. For practical reasons (such as desired flavoring) the combined amount is preferably about 75 wt. % or less, more preferably about 70 wt. % or less.

In particular by using potato fiber, potato protein - preferably the combination of both - at a (combined) usage level of 1wt.% to 75 wt.%, preferably from 5 wt.% to 70 wt.%, in the dry batter mix, in addition to one or more ingredients such as used in traditional batters, the end coated food products are able to give much improved crispy texture after microwaving or oven baking, similar to fried food texture. In preferred forms, the composition will contain at least 10 wt. % potato protein and/or potato fiber. Potato dextrins can also be used to good advantage in combination with the potato protein and/or fiber.

In addition, the baking oven or microwave heated products can also remain crispy for a longer period of time at room temperature or under a heating lamp. The coated food products with batters containing fiber and/or insoluble protein can also be fried for added benefit of crispy texture and remain crispy for an extended holding time. Another benefit of using the batter system containing the fiber and/or the insoluble protein is the low carbohydrate level in the batter, that could be used for people who prefer a low carbohydrate diet.

In an embodiment the invention further provides a (dry) batter mix comprising (in addition to the (insoluble) fiber and/or insoluble protein), one or more food ingredients selected from the group consisting of flavors, sweeteners (such as sugars), colors, conditioners, leavening, flours (such as from wheat, corn or rice), spices, herbs, salt and salt substitutes, added nutrients, thickeners (such as gums and other hydrocolloids), acidulents, fats and oils, and the like. The ingredients are preferably essentially dry and can be mixed, with components as needed or desired in any suitable dry blender, such as a V-blender or a ribbon mixer. Agglomeration is useful for many products. If desired, the dry ingredients can be premixed and hydrated for packaging. In some cases it will be desired to mix the ingredients in hydrated or partially hydrated form.

It should be noted that satisfactory results have been achieved without requiring high amounts of oils or fats such as triglycerides, in fact the batter composition may be (essentially) free of fats and oils. If present, at all, the (glyceride) fat plus (glyceride) oil content is usually 15 wt. % based on the dry weight, or less, preferably 10 wt. % or less, more preferably 5 wt. % or less, in particular 1 wt. % or less. Low fat/oil content is in particular advantageous from a dietetic point of view.

The following examples are provided to further illustrate the invention and some of its practical aspects. Unless otherwise indicated all parts and percentages are based on the weight of the composition at the indicated stage in processing.

### Example 1

### Bakable and Microwavable Battered and Breaded Fish With Potato Fiber

| **BATTER MIX INGREDIENTS** | % |
|---|---|
| Hard wheat flour | 10.0 |
| Rice flour | 22.1 |
| Paselli ™FP potato fiber* | 10.0 |
| Perfectamyl™ B1102 potato dextrin* | 20.0 |
| Perfectamyl™ FFCA modified potato starch* | 10.0 |
| Perfectacoat™ QS modified potato starch* | 20.0 |
| Paselli ™EZ 1080 potato starch* | 2.0 |
| Salt | 5.0 |
| Sodium acid pyrophosphate | 0.5 |
| Baking soda | 0.2 |
| Xanthan gum | 0.2 |
| **TOTAL** | **100.0** |

| | |
|---|---|
| *AVEBE America Inc, Princeton NJ USA | |

In a different batch, the Perfectamyl™ B1102 potato dextrin, Perfectamyl™ FFCA modified potato starch and the Perfectacoat™ QS modified potato starch are replaced by 50.0 wt. % PerfectaCrisp™ 1.01 modified potato starch (Avebe).

### PREPARATION PROCEDURE

Add 990 ml water to 100 g dry batter mix and mix at low to medium speed for 5 min.

Predust partial defrosted frozen or fresh fish pieces with 50% wheat flour and 50% Perfectamyl Gel modified potato starch.

Pass through batter and let drain.

Pass through seasoned homestyle bread crumbs.

Par fry at 190 °C (or 375 F) for 90-110 sec (for end product baking or microwaving). If end product is full fried, par fry at 190 °C (or 375 F) for 50 sec.

Freeze at -20 °C.

Reconstitute by baking at 190 °C (or 375 F) for 16-20 min or microwaving for 45 -60 sec or till internal temperature reaching 71 °C (or 160 F).

### Example 2

### Bakable and Microwavable Battered Chicken Tenders With Potato Fiber and Potato Protein

| **BATTER MIX INGREDIENTS** | % |
|---|---|
| Hard wheat flour | 10.0 |
| Rice flour | 22.1 |
| Paselli ™FP potato fiber | 5.0 |
| Potato protein | 5.0 |
| Perfectamyl™ B1102 potato dextrin | 20.0 |
| Perfectamyl™ FFCA modified potato starch | 10.0 |
| Perfectacoat™ QS modified potato starch | 20.0 |
| Paselli™ EZ 1080 potato starch | 2.0 |
| Salt | 5.0 |
| Sodium acid pyrophosphate | 0.5 |
| Baking soda | 0.2- |
| Xanthan gum | 0.2 |
| **TOTAL** | **100.0** |

In a different batch, the Perfectamyl™ B1102 potato dextrin, Perfectamyl™ FFCA modified potato starch and the Perfectacoat™ QS modified potato starch are replaced by 50.0 wt. % PerfectaCriSp™ 101 modified potato starch (Avebe).

### PREPARATION PROCEDURE

Add 890 ml water to 100 g dry batter mix and mix at low to medium speed for 5 min.

Predust partial defrosted frozen or fresh chicken breast meat with 50% wheat flour and 50% Perfectamyl Gel modified potato starch.

Pass through batter and let drain.

Roll the meat through another powder (50% wheat flour and 50% Perfectamyl Gel).

Batter again and drain.

Par fry at 190 °C (or 375 F) for 90-110 sec (for end product baking or microwaving). If end product is full fried, par fry at 190 °C (or 375 F) for 50 sec.

Freeze at -20 C.

Reconstitute by baking at 190 °C (or 375 F) for 16-20 min or microwaving for 45 -60 sec or till internal temperature reaching 71 °C or 160 F.

The above description is intended to allow the person skilled in the art to practice the invention. It is not intended to detail all possible applications, variations and modifications that will be apparent to the skilled worker upon reading the description. It is intended, however, that all such applications, variations and modifications be included in the scope of the invention as defined by the claims which follow.

## Claims

1. A batter composition, comprising insoluble vegetable protein and insoluble dietary fibers.

2. A composition according to claim 1, which when used in frozen coated food products provides a crispy texture after microwaving and/or oven-baking, (similar to that of deep fat fried coated foods).

3. A composition according to claim 1 or 2, wherein the composition comprises an insoluble dietary fiber selected from the group consisting of cellulose fibers, hemicellulose fibers and lignin fibers, preferably from potato fibers.

4. A composition according to any one of the preceding claims, comprising a dietary fiber selected from gums, pectin fibers, starch fibers, glycoprotein fibers and mucilages.

5. A composition according to any one of the preceding claims, wherein the solubility of the protein and/or the insoluble dietary fiber in water (pH 7) at a temperature of 20 °C is 10 wt.% or less, preferably 5 wt.% or less, more preferably 2.5 wt.% or less, based upon the total weight of the solution.

6. A composition according to any one of the preceding claims, wherein the insoluble protein is a protein from a cereal, a fungus, a legume, a tuber or a root, preferably a protein selected from the group consisting of potato proteins, soy proteins, arrow root proteins, cassava proteins, yam proteins and taro proteins.

7. A composition according to any one of the preceding claims, wherein the combined amount of the fibers and the insoluble proteins is at least 1 wt.%, preferably at least 5 wt.%, more preferably at least 10 wt.% based upon the total dry weight.

8. A composition according to any one of the preceding claims wherein the combined amount of ingredients other than the fibers and the insoluble proteins is 95 wt.% or less, preferably 90 wt.% or less, more preferably 85 wt.% or less based upon the total dry weight.

9. A composition according to any one of the preceding claims, comprising less than 85 wt.% based upon the total dry weight digestible carbohydrates.

10. A composition according to any one of the preceding claims, wherein the composition comprises at least one component selected from the group consisting of (potato) dextrins, flavors (such as sweeteners, spices, herbs, salts, salt substitutes), colors, conditioners, leavenings, flours (such as from wheat, corn, rice), added nutrients, thickeners (such as gums and other hydrocolloids), acidulents, fats and oils.

11. A batter composition according to any one of the preceding claims, comprising at least one component selected from the group consisting of dietary fibers from a tuber or a root and insoluble vegetable proteins from a tuber or a root.

12. A batter composition according to any one of the preceding claims, comprising at least one component selected from the group consisting of dietary fibers from a potato and insoluble vegetable proteins from a potato or soy.

13. A batter composition according to any one of the preceding claims, comprising potato fiber and potato protein.

14. A batter composition according to claim 11-13, wherein the combined amount of said dietary fibers and said insoluble protein is at least 1 wt.%, preferably at least 5 wt.%, more preferably at least 10 wt.%.

15. Coated food product, wherein at least part of the surface of the food product comprises a batter composition according to any one of the claims 1-14 and preferably at least part of the surface comprising the batter composition contains bread crumbs.

16. Coated food product according to claim 15, wherein the coated food product is frozen.

17. Coated food product according to claim 15 or 16, comprising a food selected from the group consisting of fish, meat and vegetable products.

18. Coating for a food, comprising a batter composition as defined in any of the claims 1-14 and preferably bread crumbs.

19. A process for preparing a coated food product comprising coating the food product with a composition according to any one of the claims 1-14.

20. A process for preparing a batter composition according to any one of the claims 1-14, which comprises mixing the ingredients as defined in any one of the claims 1-14.

21. Method for preparing food, comprising baking and/or microwaving the food product according to claim 15, 16 or 17.

22. Use of insoluble vegetable protein and insoluble dietary fibers to impart a crispy texture on a microwaved and/or oven-baked food.

23. Use according to claim 22, wherein the fiber is a fiber as defined in any of the claims 4-6 and/or the protein is a protein as defined in claim 6 or 7.

## Patentansprüche

1. Backzusammensetzung, die unlösliches pflanzliches Protein und unlösliche Ballaststoffe umfasst.

2. Zusammensetzung nach Anspruch 1, die, wenn sie in gefrorenen umhüllten Nahrungsmittelprodukten verwendet wird, nach Mikrowellenbehandlung und/oder Ofenbacken eine knusprige Textur (ähnlich der von frittierten umhüllten Nahrungsmitteln) verleiht.

3. Zusammensetzung nach Anspruch 1 oder 2, wobei die Zusammensetzung unlöslichen Ballaststoff ausgewählt aus der Gruppe bestehend aus Zelluloseballaststoffen, Hemizelluloseballaststoffen und Ligninballaststoffen umfasst, vorzugsweise von Kartoffelballaststoffen.

4. Zusammensetzung nach einem der vorhergehenden Ansprüche, die Ballaststoffe ausgewählt aus Gummen, Pektinballaststoffen, Stärkeballaststoffen, Glykoproteinballaststoffen und Schleimstoffen umfasst.

5. Zusammensetzung nach einem der vorhergehenden Ansprüche, wobei die Löslichkeit des Proteins und/des unlöslichen Ballaststoffes im Wasser (pH 7) bei einer Temperatur von 20 °C 10 Gew.-% oder weniger beträgt, vorzugsweise 5 Gew.-% oder weniger, insbesondere 2,5 Gew.-% oder weniger, bezogen auf das Gesamtgewicht der Lösung.

6. Zusammensetzung nach einem der vorhergehen Ansprüche, wobei das unlösliche Protein ein Protein von Zerealie, Pilzen, Hülsenfrucht, Knollengewächs oder Wurzel ist, vorzugsweise Protein ausgewählt aus der Gruppe bestehend aus Kartoffelproteinen, Sojaproteinen, Pfeilwurzelproteinen, Maniokproteinen, Süßkartoffelproteinen und Wasserbrotwurzelproteinen.

7. Zusammensetzung nach einem der vorhergehenden Ansprüche, wobei die kombinierte Menge der Ballaststoffe und der unlöslichen Proteine mindestens 1 Gew.% beträgt, vorzugsweise mindestens 5 Gew.-%, insbesondere mindestens 10 Gew.-%, bezogen auf das Gesamttrockengewicht.

8. Zusammensetzung nach einem der vorhergehenden Ansprüche, wobei die kombinierte Menge der von den Ballaststoffen und den unlöslichen Proteinen verschiedenen Bestandteile 95 Gew.-% oder weniger beträgt, vorzugsweise 90 Gew.-% oder weniger, insbesondere 85 Gew.% oder weniger, bezogen auf das Gesamttrockengewicht.

9. Zusammensetzung nach einem der vorhergehenden Ansprüche, die weniger als 85 Gew.-% verdaubare Kohlenhydrate umfasst, bezogen auf das Gesamttrockengewicht.

10. Zusammensetzung nach einem der vorhergehenden Ansprüche, wobei die Zusammensetzung mindestens eine Komponente ausgewählt aus der Gruppe bestehend aus (Kartoffel)Dextrinen, Geschmacksstoffen (wie Süßstoffen, Gewürzen, Kräutern, Salzen, Salzersatzstoffen), Färbemitteln, Konditioniermitteln, Gärungsstoffen, Mehlen (wie von Weizen, Mais, Reis), zugesetzten Nährstoffen, Verdickern (wie Gummen und anderen Hydrokolloiden), Säuerungsmitteln, Fetten und Ölen umfasst.

11. Backzusammensetzung nach einem der vorhergehenden Ansprüche, die mindestens eine Komponente ausgewählt aus der Gruppe bestehend aus Ballaststoffen von einem Knollengewächs oder einer Wurzel und unlösliche pflanzliche Proteine von einem Knollengewächs oder einer Wurzel umfasst.

12. Backzusammensetzung nach einem der vorhergehenden Ansprüche, die mindestens eine Komponente ausgewählt aus der Gruppe bestehend aus Ballaststoffen von Kartoffeln und unlöslichen pflanzlichen Proteinen von Kartoffeln oder Soja umfasst.

13. Backzusammensetzung nach einem der vorhergehenden Ansprüche, die Kartoffelballaststoff und Kartoffelprotein umfasst.

14. Backzusammensetzung nach Anspruch 11 bis 13, wobei die kombinierte Menge der Ballaststoffe und des unlöslichen Proteins mindestens 1 Gew.-% beträgt, vorzugsweise mindestens 5 Gew.-%, insbesondere mindestens 10 Gew.-%.

15. Umhülltes Nahrungsmittelprodukt, wobei mindestens ein Teil der Oberfläche des Nahrungsmittelprodukts eine Backzusammensetzung gemäß einem der Ansprüche 1 bis 14 umfasst, und vorzugsweise mindestens ein Teil der Oberfläche, welche die Backzusammensetzung umfasst, Brotkrümel enthält.

16. Umhülltes Nahrungsmittelprodukt nach Anspruch 15, wobei das umhüllte Nahrungsmittelprodukt gefroren ist.

17. Umhülltes Nahrungsmittelprodukt nach Anspruch 15 oder 16, dass ein Nahrungsmittel ausgewählt aus der Gruppe bestehend aus Fisch-, Fleisch- und Pflanzenprodukten umfasst.

18. Umhüllung für ein Nahrungsmittel, die eine Backzusammensetzung wie in einem der Ansprüche 1 bis 14 definiert und vorzugsweise Brotkrümel umfasst.

19. Verfahren zur Herstellung eines umhüllten Nahrungsmittelprodukts, bei dem das Nahrungsmittelprodukt mit einer Zusammensetzung gemäß einem der Ansprüche 1 bis 14 umhüllt wird.

20. Verfahren zur Herstellung einer Backzusammensetzung gemäß einem der Ansprüche 1 bis 14, bei dem die Bestandteile, wie sie in einem der Ansprüche 1 bis 14 definiert sind, gemischt werden.

21. Verfahren zur Herstellung von Nahrungsmitteln, bei den das Nahrungsmittelprodukt gemäß Anspruch 15, 16 oder 17 gebacken und/oder mikrowellenbehandelt wird.

22. Verwendung von unlöslichem pflanzlichen Protein und unlöslichen Ballaststoffen, um einem mikrowellebehandelten und/oder ofengebackenen Nahrungsmittel eine knusprige Textur zu verleihen.

23. Verwendung nach Anspruch 22, wobei der Ballaststoff ein Ballaststoff wie in einem der Ansprüche 4 bis 6 definiert ist und/oder das Protein ein Protein wie in Anspruch 6 oder 7 definiert ist.

## Revendications

1. Composition de pâte à frire, comprenant une protéine végétale insoluble et des fibres alimentaires insolubles.

2. Composition selon la revendication 1 qui, dans des produits alimentaires enrobés congelés, donne une texture croustillante après passage aux micro-ondes et/ou buisson au four (comparable à celle des produits enrobés frits dans la friture).

3. Composition selon la revendication 1 ou 2, dans laquelle la composition: comprend une fibre alimentaire insoluble choisie dans le groupe constitué par les fibres cellulosiques, les fibres hémi-cellulosiques et les fibres de lignine, de préférence, provenant de fibres de pomme de terre.

4. Composition selon l'une quelconque des revendications précédentes, comprenant une fibre alimentaire choisie parmi les gommes, les fibres de pectine, les fibres d'amidon, les fibres de glycoprotéines et les mucilages.

5. Composition selon l'une quelconque des revendications précédentes, dans laquelle la solubilité de la protéine et/ou de la fibre alimentaire insoluble dans l'eau (pH 7) à une température de 20°C est de 10 % en poids ou moins, de préférence, due 5 % en poids ou moins, plus préférablement, de 2,5 % en poids ou moins, sur la base du poids total de la solution.

6. Composition selon l'une quelconque des revendications précédentes, dans laquelle la protéine insoluble est une protéine issue d'une céréale, d'un champignon, d'un légume, d'un tubercule ou d'une racine, de préférence, une protéine choisi dans le groupe constitué par les protéines de pomme de terre, les protéines de soja, les protéines d'arrow root, les protéines de manioc, les protéines d'igname et les protéines de taro.

7. Composition selon l'une quelconque des revendications précédentes, dans laquelle la quantité combinée des fibres et des protéines insolubles est d'au moins 1 % en poids, de préférence, d'au moins 5 % en poids, mieux encore, d'au moins 10 % en poids, sur la base du poids sec total.

8. Composition selon l'une quelconque des revendications précédentes, dans laquelle la quantité combinée des ingrédients autres que les fibres et les protéines insolubles est de 95 % en poids ou moins, de préférence, de 90 % en poids ou moins, plus préférablement encore, de 85 % en poids ou moins, sur la base du poids sec total.

9. Composition selon l'une quelconque des revendications précédentes, comprenant moins de 85 % en poids, sur la base du poids sec total, de glucides digestibles.

10. Composition selon l'une quelconque des revendications précédentes, dans laquelle la composition comprend au moins un composant choisi dans le groupe constitué par les dextrines (de pomme de terre), les arômes (tels qu'édulcorants, épices, herbes, sels, substituts de sel), les colorants, les conditionneurs, les levains, les farines (telles que de blé, de mais, de riz), les nutriments ajoutés, les épaississants (tels que gommes et autres hydro-colloides), les acidulants, les graisses et les huiles.

11. Composition de pâte à frire selon l'une quelconque des revendications précédentes, comprenant au moins un composant choisi dans le groupe constitué par les fibres alimentaires provenant d'un tubercule ou d'une racine et les protéines végétales insolubles provenant d'un tubercule ou d'une racine.

12. Composition de pâte à frire selon l'une quelconque des revendications précédentes, comprenant au moins un composant choisi dans le groupe constitué par les fibres alimentaires provenant d'une pomme de terre et les protéines végétales insolubles provenant d'une pomme de terre ou du soja.

13. Composition de pâte à frire selon l'une quelconque des revendications précédentes, comprenant une fibre de pomme de terre et une protéine de pomme de terre.

14. Composition de pâte à frire selon les revendications 11 à 13, dans laquelle la quantité combinée desdites fibres alimentaires et de ladite protéine insoluble est d'au moins 1 % en poids, de préférence, d'au moins 5 % en poids, plus préférablement encore, d'au moins 10 % en poids.

15. Produit alimentaire enrobé, dans lequel au moins une partie de la surface du produit alimentaire comprend une composition de pâte à frire selon l'une quelconque des revendications 1 à 14 et, de préférence, au moins une partie de la surface comprenant la composition de pâte à frire contient de la chapelure.

16. Produit alimentaire enrobé selon la revendication 15, dans lequel le produit alimentaire enrobé est congelé.

17. Produit alimentaire enrobé selon la revendication 15 ou 16, comprenant un aliment choisi dans le groupe constitué par les produits à base de poisson, de viande et de légume.

18. Enrobage pour aliment, 1 comprenant une composition de pâte à frire selon l'une quelconque des revendications 1 à 14 et, de préférence, de la chapelure.

19. Procédé de préparation d'un produit alimentaire enrobé comprenant l'enrobage du produit alimentaire avec une composition selon l'une quelconque des revendications 1 à 14.

20. Procédé de préparation d'une composition de pâte à frire selon l'une quelconque des revendications 1 à 14, qui comprend le mélange des ingrédients tels que définis dans l'une quelconque des revendications 1 à 14.

21. Procédé de préparation d'un, aliment, comprenant la cuisson et/ou le passage aux micro-ondes le produit alimentaire selon la revendication 15, 16 ou 17.

22. Utilisation d'une protéine végétale insoluble et de fibres alimentaires insolubles pour conférer une texture croustillante à un aliment passé aux micro-ondes et/ou cuit au four.

23. Utilisation selon la revendication 22, dans laquelle la fibre est une fibre telle que définie dans l'une quelconque des revendications 4 à 6 et/ou la protéine est une protéine telle que définie dans les revendications 6 ou 7.
